# EUROPEAN PATENT APPLICATION

(11) **EP 0 522 829 A2**
(43) Date of publication of application: **13.01.1993**
(21) Application number: 92306233.5
(22) Date of filing: 07.07.1992
(51) Int. Cl.: G05D 1/02, G01S 5/02, G05D 1/00, G01S 5/14

(54) **Movement control system and movement monitoring system for moving body**

(30) Priority: 12.07.1991 JP 172124/91
(71) Applicant: PIONEER ELECTRONIC CORPORATION, Meguro-ku Tokyo-to (JP)
(72) Inventor: Yamauchi, Keiichi, c/o Pioneer Electronic Corp., Kawagoe-shi, Saitama-ken (JP)
(74) Representative: Brunner, Michael John

(57) **Abstract**

A movement control system for carrying out movement control of a moving body such as an automotive vehicle, a ship, or an air-plane, etc. has a position determination unit (101) which receives position determining radio waves to determine a position of the moving body to output position determination data, and a movement scheduled path data memory (102) which stores therein movement scheduled path data of the moving body. Further, an arithmetic unit (103) detects a deviation between an actual movement path and a movement scheduled path of the moving body on the basis of the position determination data and the movement scheduled path data to calculate correction control data for correcting the deviation to output it. As a result, a movement controller controls movement manipulating magnitude of the moving body on the basis of the correction control data.

Further, a movement monitoring system has a position determination unit which receives position determining radio waves to determine a position of the moving body to output position determination data, and a position determining data transmitter (54) which transmits position determination data. In addition, a position determination data receiver (56) receives the transmitted position determination data to output it as display data. As a result, the display unit displays (57) the movement state of the moving body on the basis of the display data.

## Description

### BACKGROUND OF THE INVENTION

This invention relates to a movement control system for carrying out movement control of a moving body such as an automotive vehicle, a ship or a vessel, or an air-plane, etc., and a movement monitoring system for carrying out monitoring of the movement state of such moving bodies.

Hitherto, in scattering or dropping of agricultural chemicals (cropdusting) in a relatively small or limited spreading or scattering area or zone, or photographing in a dangerous area or zone such as a crater of a volcano, etc., an operator manipulated or operated a radio-controlled helicopter by using a radio remote control device, so called a radio control device from the viewpoints of reduction in cost, reduction in working time, and insurance of safety, etc. to carry out work by manual control.

Meanwhile, for example, in the conventional scattering of agricultural chemicals or crop-dusting, since an operator conducts a control by using a radio control device, the range where agricultural chemicals can be scattered or spread is limited to the visual field of the operator. Accordingly, in the event that a radio-controlled helicopter is out of the visual field, it was disadvantageously difficult to allow the radio-controlled helicopter to be within the visual field for the second time.

### SUMMARY OF THE INVENTION

A first object of this invention is to provide a movement control system capable of easily carrying out movement control of a moving body.

A second object of this invention is to provide a movement monitoring system capable of easily monitoring the movement state of a moving body.

In accordance with a preferred embodiment, there is provided a movement control system for a moving body comprising a GPS (Global Positioning System) position determination unit adapted to receive radio waves from GPS satellites to determine the position of a moving body to output GPS position determination data, a movement scheduled path data memory adapted to store therein movement scheduled path data of the moving body, an arithmetic unit adapted for detecting a deviation between an actual movement path and a movement scheduled path of the moving body on the basis of the GPS position determination data and the movement scheduled path data to calculate correction control data for correcting that deviation to output it, and a movement controller for controlling movement manipulated variables of the moving body on the basis of the correction control data.

Here, the movement controller may include an extraordinary state detection unit for detecting that an extraordinary state occurs in the controlled moving body, and a moving body operating state holding unit for allowing the operating state of the moving body to be held at a position of the moving body at the time when the extraordinary state detection signal is outputted.

In the movement control system for moving body constructed as above, the GPS position determination unit receives radio waves from the GPS satellites to determine a position of the moving body to output GPS position determination data. The movement scheduled path data memory stores therein movement scheduled path data of the moving body. The arithmetic unit detects a deviation between an actual movement path and a movement scheduled path of the moving body on the basis of the GPS position determination data and the movement scheduled path data to calculate correction control data for correcting the deviation to output it. The movement controller controls movement manipulating magnitude of the moving body on the basis of the correction control data. Accordingly, the moving body can move along the movement scheduled path determined in advance while correcting an actual movement path obtained by GPS position determination.

Further, there is provided a movement control system for a moving body comprising a radio wave position determination unit adapted to receive radio waves from position determining radio wave transmitters, a movement scheduled path data memory adapted to store therein movement scheduled path data of the moving body, an arithmetic unit adapted for detecting a deviation between an actual movement path and a movement scheduled path of the moving body on the basis of the radio wave position determination data and the movement scheduled path data to calculate correction control data for correcting that deviation to output it, and a movement controller for controlling movement manipulated variables of the moving body on the basis of the correction control data.

In the movement control system for moving body thus constructed, the radio wave position determination unit receives radio waves from the position determinating radio wave transmitters to determine a position of the moving body to output radio wave position determination data. The movement scheduled path data memory stores therein the movement scheduled path data of the moving body. The arithmetic unit detects a deviation between an actual movement path and the movement scheduled path of the moving body on the basis of the radio wave position determination data and the movement scheduled path data to calculate correction control data for correcting the deviation to output it. The movement controller controls movement manipulating magnitude on the basis of the correction control data. Accordingly, the moving body can move along the movement scheduled path determined in advance while correcting an actual movement path obtained by carrying out position determination on the basis of position determining radio waves.

Further, there is provided a movement monitoring system for a moving body comprising a GPS position determination unit provided in a moving body and adapted to receive radio waves from GPS satellites to determine a position of the moving body to output GPS position determination data, a position determination data transmitter provided in the moving body and adapted to transmit position determination data corresponding to a movement state of the moving body on the basis of the GPS position determination data, a position determination data receiver adapted to receive the transmitted position determination data and adapted to output it as display data, and a display unit for displaying the movement state of the moving body on the basis of the display data.

In the movement monitoring system thus constructed, the GPS position determination unit receives radio waves from the GPS satellites to determine a position of the moving body to output GPS position determination data. The position determination data transmitter transmits position determination data on the basis of the GPS position determination data. The position determination receiver receives the transmitted position determination data to output it as display data. The display unit displays the movement state of the moving body on the basis of the display data. Accordingly, it is possible to easily monitor the movement state of the moving body on the basis of GPS position determination data.

Further, there is provided a movement monitoring system for a moving body comprising a radio wave position determination unit provided in the moving body to receive radio waves from position determinating radio wave transmitters to determine a position of the moving body to output radio wave position determination data, a position determination data transmitter provided in the moving body to transmit position determination data corresponding to a movement state of the moving body on the basis of the radio wave position determination data, a position determination data receiver adapted to receive the transmitted position determination data to output it as display data, and a display unit for displaying the movement state of the moving body on the basis of the display data.

In the movement monitoring system thus constructed, the radio wave position determination unit receives radio waves from position determinating transmitters to determine a position of the moving body to output radio wave position determination data. The position determination data transmitter transmits position determination data on the basis of radio wave position determination data. The position determination data receiver receives the transmitted position determination data to output it as display data. The display unit displays the movement state of the moving body on the basis of display data. Accordingly, it is possible to easily monitor the movement state of the moving body on the basis of position determination data by the position determinating radio waves.

Further, there is provided a movement monitoring system for a moving body comprising a first GPS position determination unit provided in the moving body and adapted to receive radio waves from GPS satellites to determine a position of the moving body to output first GPS position determination data, a position determination data transmitter provided in the moving body and adapted to transmit position determination data corresponding to the movement state of the moving body to transmit position determination data corresponding to the movement state of the moving body on the basis of the first GPS position determination data, a second GPS position determination unit adapted to receive radio waves from the GPS satellites to determine a monitoring position to output second GPS position determination data, position determination data receiver adapted to receive the transmitted position determination data, and to output display data corresponding to a relative movement state of the moving body on the basis of the position determination data and the second GPS position determination data, and a display unit for displaying the relative movement state with respect to the second GPS position determination unit of the moving body on the basis of display data.

In the movement monitoring system for a moving body thus constructed, the first GPS position determination unit receives radio waves from the GPS satellites to determine a position of the moving body to output first GPS position determination data. The position data transmitter transmits position determination data on the basis of the first GPS position determination data. The second GPS position determination unit receives radio waves from the GPS satellites to determine a monitoring position to output second GPS position determination data. The position determination data receiver receives the transmitted position determination data, and outputs display data corresponding to a relative movement state of the moving body on the basis of position determination data and the second GPS position determination data. The display unit displays a relative movement state with respect to the second GPS position determination unit of the moving body on the basis of display data. Accordingly, it is possible to easily monitor relative movement state with respect to the monitoring position of the moving body on the basis of the GPS position determination data.

In addition, there is provided a movement monitoring system for a moving body comprising a first radio wave position determination unit provided in the moving body and adapted to receive radio waves from position determinating radio wave transmitters to determine a position of the moving body to output first radio wave position determination data, a position determination data transmitter provided in the moving body and adapted for transmitting position determination data corresponding to a movement state of the moving body on the basis of the first radio wave position determination data, a second radio wave position determination unit adapted to receive radio waves from the position determination radio wave transmitters to determine a monitoring position to output second radio wave position determination data, a position determination receiver adapted to receive the transmitted position determination data and to output display data corresponding to the relative movement state of the moving body on the basis of the position determination data and the second radio wave position determination data, and a display unit for displaying relative movement state with respect to the second radio wave position determination means of the moving body on the basis of the display data.

In the movement monitoring system thus constructed, the first radio wave position determination unit receives radio waves from the position determinating radio wave transmitters to determine a position of the moving body to output first radio wave position determination data. The position determination data transmitter transmits position determination data on the basis of the first radio wave position determination data. The second radio wave position determination unit receives radio waves from the position determinating radio wave transmitters to determine a monitoring position to output second radio wave position determination data. The position determination data receiver receives the transmitted position determination data, and outputs display data on the basis of the position determination data and the second radio wave position determination data. The display unit displays relative movement state with respect to the second radio wave position determination unit of the moving body on the basis of the display data. Accordingly, it is possible to easily monitor relative movement state with respect to the monitoring position of the moving body on the basis of the position determination data by the position determinating radio waves.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing the outline of the configuration of a first embodiment.

FIG. 2 is a block diagram showing the basic configuration of the first embodiment.

FIG. 3 is a block diagram showing the basic configuration of a GPS receiver.

FIG. 4 is a view for explaining the operation of the first embodiment.

FIG. 5 is a view for explaining setting of flying data.

FIG. 6 is a block diagram showing the outline of the configuration of a second embodiment.

FIG. 7 is a view for explaining the operation of the second embodiment.

FIG. 8 is a block diagram showing the outline of the configuration of a third embodiment.

FIG. 9 is a block diagram showing the basic configuration of the third embodiment.

FIG. 10 is a view for explaining the operation of the third embodiment.

FIG. 11 is a perspective view showing the appearance of a remote control device.

FIG. 12 is a block diagram showing the basic configuration of a remote control transmitter.

FIG. 13 is a block diagram showing a basic configuration of a remote control receiver.

FIG. 14 is a block diagram showing the basic configuration of a servo circuit.

FIG. 15 is a block diagram showing the basic configuration of a position determination data transmitter.

FIG. 16 is a block diagram showing the basic configuration of a position determination data receiver.

FIG. 17 is a block diagram showing the outline of the configuration of a fourth embodiment.

FIG. 18 is a block diagram showing the outline of the configuration of a fifth embodiment.

FIG. 19 is a block diagram showing the basic configuration of the fifth embodiment.

FIG. 20 is a block diagram showiwng the outline of the configuration of a sixth embodiment.

### DESCRIPTION OF THE PREFERRED EMBODIMENTS

Preferred embodiments of this invention will now be described in detail with reference to the attached drawings.

### First embodiment

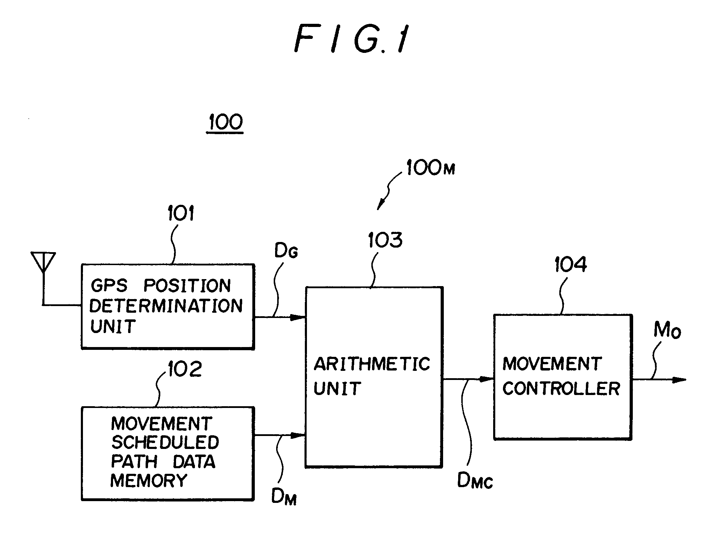

The outline of the configuration of an embodiment of a first invention is shown in FIG. 1.

A movement control system 100 for a moving body comprises a GPS (Global Positioning System) position determination unit 101 adapted to receive radio waves from GPS satellites as a positioning signal generating source to determine a position of moving body 100_{M} to output GPS position determination data D_{G}, a movement scheduled path data memory 102 adapted to store therein movement scheduled path data D_{M} of the moving body 100_{M}, an arithmetic unit 103 for detecting a deviation between an actual movement path and a movement scheduled path of the moving body 100_{M} on the basis of the GPS position determination data D_{G} and the movement scheduled path data D_{M} to calculate correction control data D_{MC} for correcting that deviation to output it, and a movement controller 104 for controlling movement manipulation magnitude M_{O} of the moving body on the basis of the correction control data D_{MC}.

In accordance with this emboidment, the GPS position determination unit 101 receives radio waves from GPS satellites to determine a position of the moving body 100_{M} to output GPS position determination data D_{G}. The movement scheduled path data memory 102 stores therein movement scheduled path data D_{M} of the moving body 100_{M}. The arithmetic unit 103 detects a deviation between an actual movement path and a movement scheduled path of the moving body 100_{M} on the basis of the GPS position determination data D_{G} and the movement scheduled path data D_{M} to calculate correction control data D_{MC} for correcting the deviation to output the data D_{MC}. The movement controller 104 controls movement manipulation magnitude M_{O} of the moving body 100_{M} on the basis of the correction control data D_{MC}. Accordingly, the moving body can move along the movement scheduled path determined in advance while correcting an actual movement path obtained by GPS position determination.

The first embodiment will now be described in more detail with reference to the attached drawings.

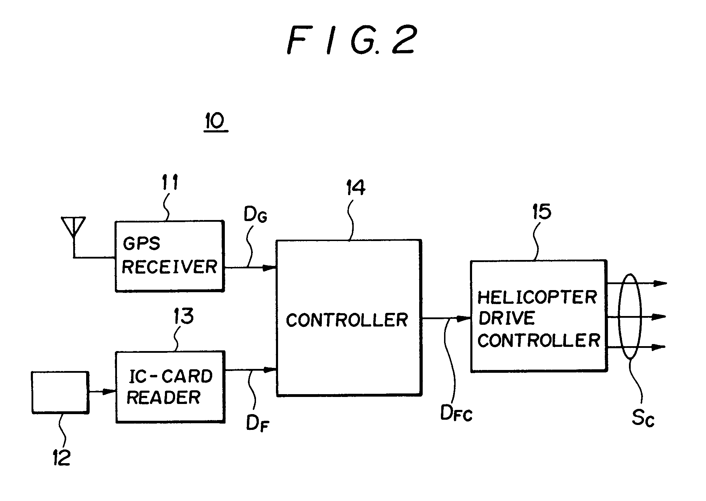

FIG. 2 is a block diagram showing the basic configuration in the case where the first invention is applied to spreading or scattering of agricultural chemicals by a pilotless or automatic controlled helicopter.

Pilotless controlled helicopter 10 comprises a GPS receiver 11 adapted to receive radio waves from GPS satellites (not shown) to determine a position of the helicopter 10 to output GPS position determination data D_{G}, an IC card 12 adapted for storing therein flying data D_{F} as movement scheduled path data, an IC card reader 13 for reading out the flying data D_{F} from the IC card 12 to output the flying data D_{F}, a controller 14 adapted to make comparison between the GPS position determination data D_{G} and the flying data D_{F} to thereby control the pilotless controlled helicopter 10 to output flying control data D_{FC} for allowing the helicopter to fly along a correct flying course, and a helicopter drive controller 15 for outputting various control signals Sc corresponding to movement manipulating magnitude in order to carry out an actual operation control such as rotational number control for the engine of the pilotless controlled helicopter 10 on the basis of the flying control data D_{FC}.

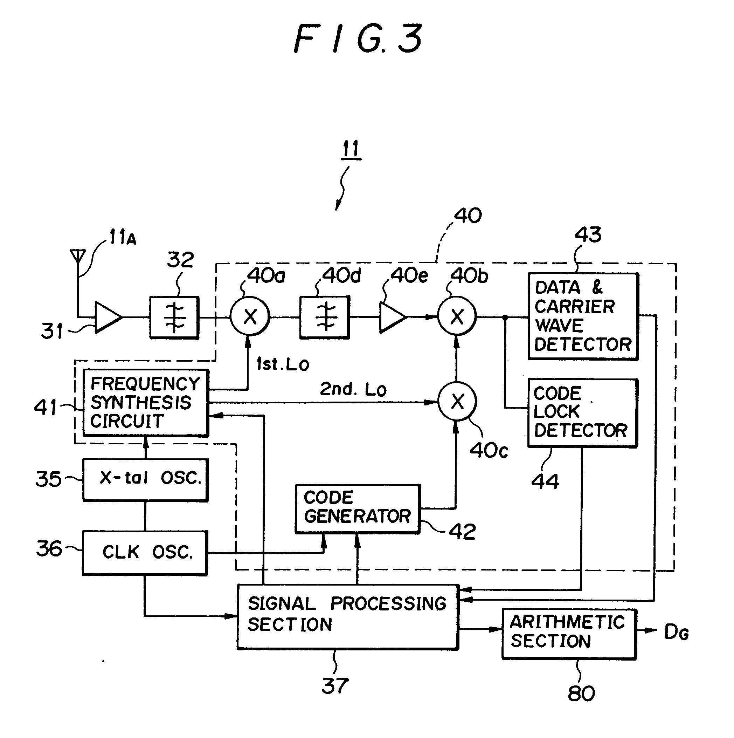

The GPS receiver 11 will now be described with reference to FIG. 3.

The GPS receiver 11 comprises a GPS receiving section 40 to which a GPS antenna 11A is connected through a preamplifier 31 and a band-pass filter 32, a crystal oscillator 35 connected to the GPS receiving section 40 and adapted to output a reference frequency signal serving as a timing control signal of the entirety of the system, a clock oscillation circuit 36 for generating a clock signal on the basis of the reference frequency signal, a signal processing section 37 for carrying out various signal processing with the clock signal as an operation timing signal, and an arithmetic section 80 for generating and outputting GPS position determination data D_{G} on the basis of an output signal of the signal processing section 37. More particularly, the GPS receiving section 40 comprises a frequency synthesis circuit 41 for generating signals having the same pattern as that of a signal carrier wave of the GPS satellite, and data relating to the position of the GPS satellite and the state of the time in the GPS satellite on the basis of an output signal from the signal processing section 37 in accordance with the reference frequency signal, a code generator 42 for generating and outputting a coded signal having the same pattern as that of a distance measurement signal from the GPS satellite on the basis of the output signal from the signal processing section 37 in accordance with the clock signal, a data and carrier wave detector 43 for carrying out correlative detection of data relating to the clock in the GPS satellite and the orbit of the GPS satellite and the carrier wave on the basis of output signals from the frequency synthesis circuit 41 and the code generator 42, and a code lock detector 44 for carrying out correlative detection of the distance measurement signal by a coded signal. In the GPS receiving section 40, reference numerals 40a, 40b and 40c denote a mixer, reference numeral 40d denotes a band-pass filter, and reference numeral 40e denotes an amplifier. In addition, 1st. Lo represents a first intermediate frequency signal synchronous with a carrier wave of a transmitted waveform from the satellite, and 2nd. Lo represents a second intermediate frequency signal synchronous with a code of the satellite to be received.

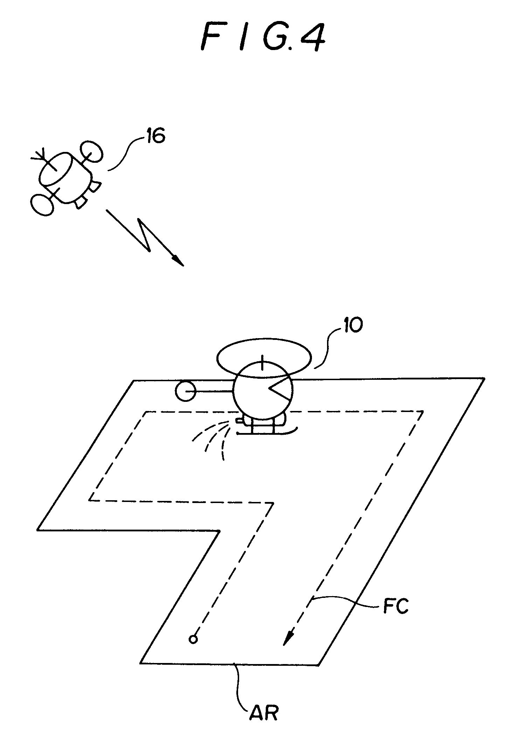

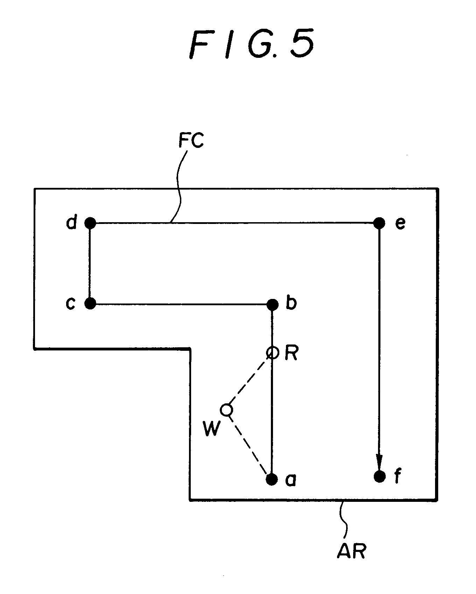

The operation of the above-described pilotless controlled helicopter 10 will now be described with reference to FIG. 4. It is now assumed that the pilotless controlled helicopter 10 can receive radio waves from four GPS satellites (only one is illustrated here) for carrying out three-dimensional position determination, that coordinate data, flying speed data and flying altitude data at flying data points a ∼ f (see FIG. 5) are stored in the IC card as flying data D_{F}, and that the flying data D_{F} corresponds to a correct flying course F_{C} for spreading or spraying agricultural chemicals within a flying area AR. It is to be noted that coordinate data at the flying data points a ∼ f may be stored as relative distance data with a predetermined point (e.g., point a) as an initial point, or may be stored as absolute position data such as latitude or longitude, etc.. Any data for designating a positional relationship may be used.

First, the GPS receiver 11 receives radio wave from the GPS satellite 16 to determine a position of the pilotless controlled helicopter 10 to output GPS position determination data D_{G}. Simultaneously with this, the IC card reader 13 reads out flying data D_{F} from the IC card 12 to output flying data D_{F}. The controller 14 makes comparison between the GPS position determination data D_{G} and the flying data D_{F} to calculate deviations between the actual flying direciton, altitude and flying speed and flying data of the pilotless controlled helicopter 10. Subsequently, the controller outputs flying control data D_{FC} to the helicopter drive controller 15 so as to allow the actual flying course (the point W in the figure) to be in correspondence with a flying course (the point R in the figure) obtained by the flying data D_{F} on the basis of a deviation between the actual flying data and the flying data D_{F} obtained. The helicopter drive controller 15 calculates a rotational speed of the main rotor, etc. on the basis of the flying control data D_{FC} to output a control signal Sc.

Thus, the pilotless controlled helicopter 10 returns to a predetermined flying course FC to continue a normal flight.

While explanation has been given only in connection with the case where the pilotless controlled helicopter carries out a normal flight, there may be employed a configuration such that the controller 14 functions as extraordinary state detection means, and the helicopter drive controller functions as moving body operating state holding means in the case where the radio wave state from the GPS satellite 16 is weak to an extent in which it is difficult to continue flight during flying, or in the case where any extraordinary state of the flying data D_{F} is detected, etc., thus to allow the pilotless controlled helicopter 10 to be placed in a hovering state on the spot. Thus, occurrence of accident or trouble by erroneous data can be prevented in advance, and the pilotless controlled helicopter 10 can be easily recovered.

As explained above, in accordance with the first embodiment, the moving body can advantageously move along the movement scheduled path determined in advance while automatically correcting an actual movement path obtained by GPS position determination.

Further, while, in the above-described first embodiment, an approach was employed to calculate all movement data (present position data, altitude data, speed data, etc.) of the pilotless controlled helicopter 10 on the basis of radio waves from GPS satellites, an approach may be employed to use various sensors of the independent type such as a geomagnetic sensor, an altitude sensor, and an acceleration sensor, etc. to obtain such movement data. Further, while an IC card and an IC card reader were used as the movement data memory means, a memory device such as an optical disk, a flexible disk, a hard disk, or a magnetic tape, etc. may be used.

### Second embodiment

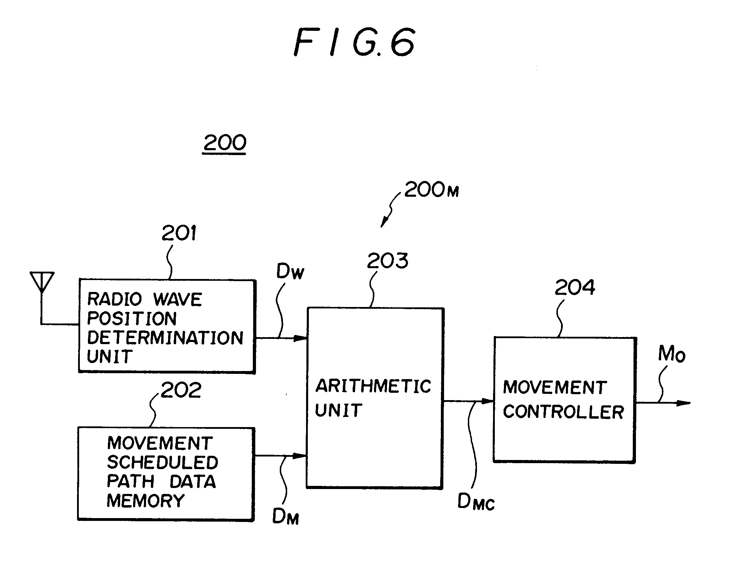

The outline of the configuration of an embodiment of a second invention is shown in FIG. 6.

A movement control system 200 for a moving body comprises a radio wave position determination unit 201 adapted to receive radio waves from position determination transmitters as a positioning signal generating source to determine a position of the moving body to output radio wave position determination data D_{W}, a movement scheduled path data memory 202 adapted for storing therein movement scheduled path data D_{M} of the moving body 200_{M}, an arithmetic unit 203 adapted for detecting a deviation between an actual movement path and a movement scheduled path of the moving body 200_{M} on the basis of the radio wave position determination data D_{M} and the movement sheduled path data D_{M} to calculate correction control data D_{MC} for correcting the deviation to output it, and a movement controller 204 for controlling movement manipulating magnitude M_{O} of the moving body on the basis of the correction control data D_{MC}.

In accordance with this embodiment, the radio wave position determination unit 201 receives radio waves from the position determination radio wave transmitters to determine a position of the moving body to output radio wave position determination data D_{W}. The movement scheduled path data memory 202 stored therein movement scheduled path data D_{M} of the moving body 200_{M}. The arithmetic unit 203 detects a deviation between an actual movement path and a movement scheduled path of the moving body 200_{M} on the basis of the radio wave position determination data D_{W} and the movement scheduled path data D_{M} to calculate correction control data D_{MC} for correcting the deviation to output it. The movement controller 204 controls a movement manipulating magnitude M_{O} of the moving body 200_{M} on the basis of the correction control data D_{M}. Accordingly, the moving body can move along the movement scheduled path determined in advance while correcting an actual movement path obtained by carrying out position determination on the basis of position determining radio waves.

The second embodiment will now be described in more detail with reference to the attached drawings.

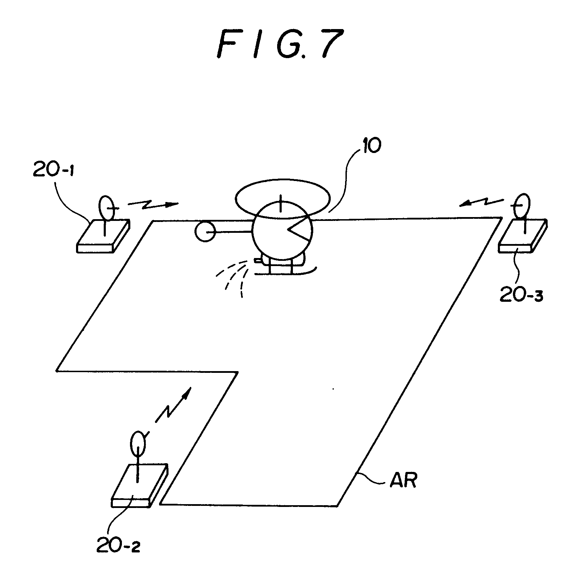

The basic configuration of the second embodiment is shown in a block form in FIG. 7. The same reference numerals are respectively attached to the same portions as those of the first embodiment of FIG. 4, and their detailed explanation is omitted here. The second embodiment differs from the first embodiment of FIG. 4 in that transmitters 20₋₁ ∼ 20₋₃ as a position determination radio wave transmitter adapted to transmit, as position determinating radio wave, radio wave in the same form as that of the GPS satellite are installed at the peripheral portion so as to include the flying region in place of the GPS satellites. In this case, the GPS receiver functions as radio wave position determination means.

Thus, it is possible to carry out a flight control on the basis of position determinating radio waves generated by the transmitters 20₋₁ ∼ 20₋₃ of which signal intensities are higher than those of radio wave generated by the GPS satellites. Accordingly, higher precision flying control can be carried out. Further, when a configuration is employed such that radio waves from the GPS satellites and position determination radio waves from the transmitters are jointly used, even in such cases that the number of GPS satellites within the visual field is insufficient, so the three-dimensional position determination cannot be conducted only by radio waves from the GPS satellites, it is possible to carry out the three-dimensional position determination by compensating insufficiency in the number of GPS satellites. Thus, flying control can be carried out with ease.

While it has been described that as the position determinating radio waves generated from the transmitters, radio waves in the same form as that of radio waves transmitted from the GPS satellites are used, a configuration adapted to generate any other position determinating radio waves may be used. In this case, it is sufficient to change the GPS receiver to a receiver capable of receiving such position determinating radio waves.

As described above, in accordance with the second embodiment, the moving body can advantageously move along the movement scheduled path determined in advance while automatically correcting an actual movement path obtained by carrying out position determination on the basis of position determining radio waves.

### Third embodiment

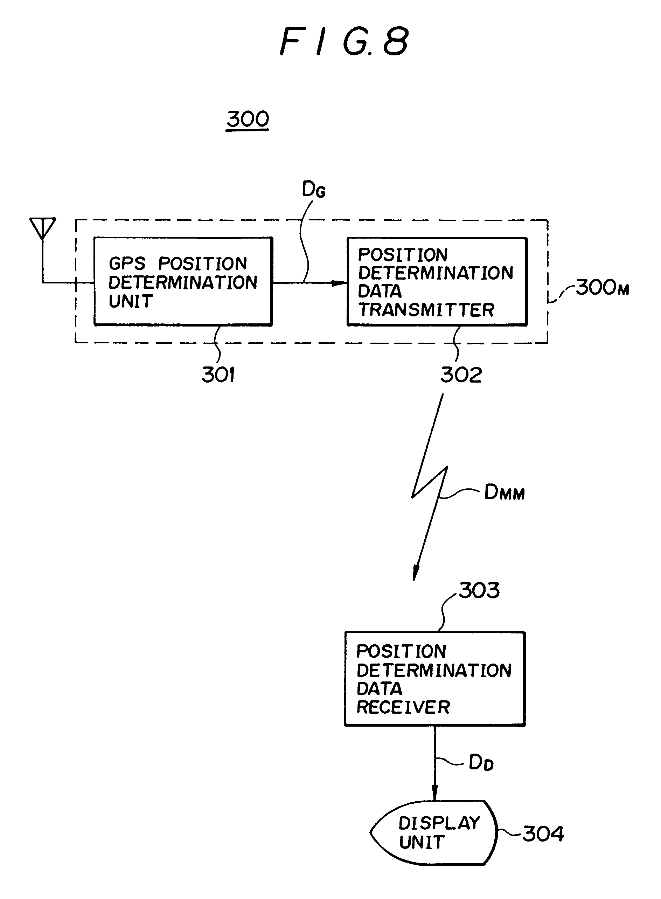

The outline of the configuration of an embodiment of a third invention is shown in FIG. 8.

A movement monitoring system 300 for a moving body comprises a GPS position determination unit 301 provided in moving body 300_{M} and adapted to receive radio waves from GPS satellites to determine a position of the moving body to output GPS position determination data D_{G}, a position determinating data transmitter 302 provided in the moving body 300_{M} and adapted to transmit position determination data D_{MM} on the basis of the GPS position determination data D_{G}, a position determination data receiver 303 adapted to receive the transmitted position determination data D_{MM} to output it as display data D_{D}, and a display unit 304 for displaying the movement state of the moving body 300_{M} on the basis of the display data D_{D}.

In accordance with this embodiment, the GPS position determination unit 301 receives radio waves from GPS satellites to determine a position of the moving body 300M to output GPS position determination data D_{G}. The position determination data transmitter 302 transmits the position determination data D_{MM} on the basis of the GPS position determination data D_{G}. The position determination data receiver 303 receives the transmitted position determination data D_{MM} to output it as display data D_{D}. The display unit 304 displays the movement state of the moving body 300_{M} on the basis of the display data D_{D} . Accordingly, it is possible to easily monitor the movement state of the moving body on the basis of the GPS position determination data.

The third embodiment will now be described in more detail with reference to the attached drawings.

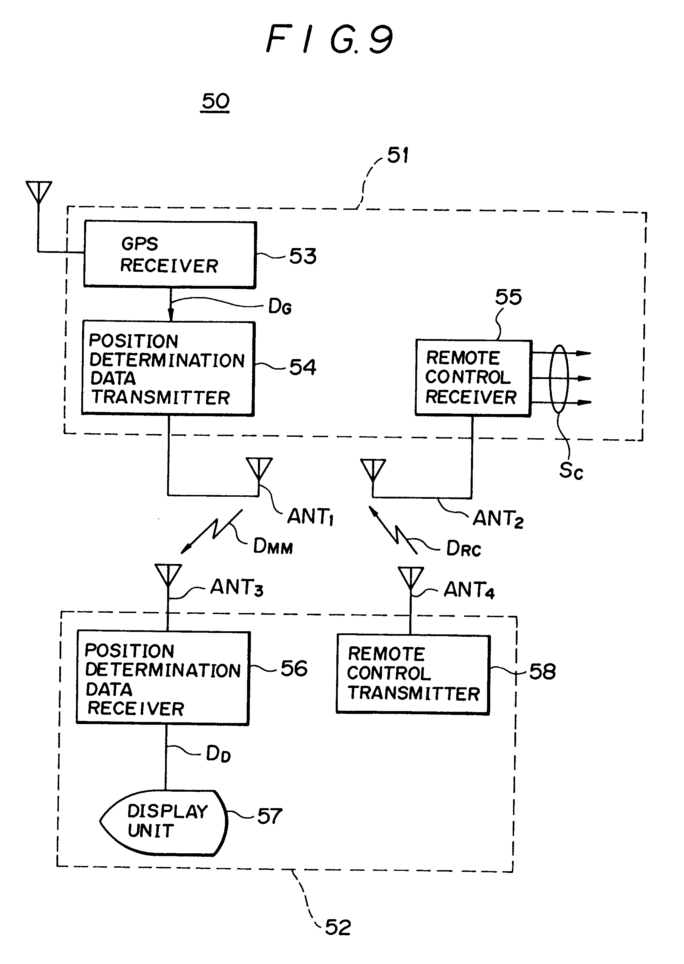

FIG. 9 is a block diagram showing the basic configuration in the case where the movement monitoring system of the third embodiment is applied to an agricultual chemicals spreading system.

The agricultual chemicals spreading system 50 is composed of a radio controlled helicopter 51, and a remote control device 52 for operating the radio controlled helicopter 51.

The radio controlled helicopter 51 comprises a GPS receiver 53 adapted to receive radio waves from GPS satellites or GPS radio wave transmitters to determine a position of the moving body to output GPS position determination data D_{G}, a position determination data transmitter 54 for transmitting position determination data D_{MM} indicating movement circumstances through an antenna ANT₁ on the basis of the GPS position determination data D_{G}, and a remote controlled receiver 55 adapted to receive remote control data D_{RC} through a receiving antenna ANT₂ to output various control signals Sc for carrying out the operation control of the radio controlled helicopter 51.

The remote controll device 52 comprises a position determination data receiver 56 adapted to receive position determination data D_{MM} through a receiving antenna ANT₃ to output it as display data D_{D}, a display 57 for displaying the movement state of the radio controlled helicopter 51 on the basis of the display data D_{D}, and a remote controll transmitter 58 for transmitting remote control data D_{RC} through a transmitting antenna ANT₄.

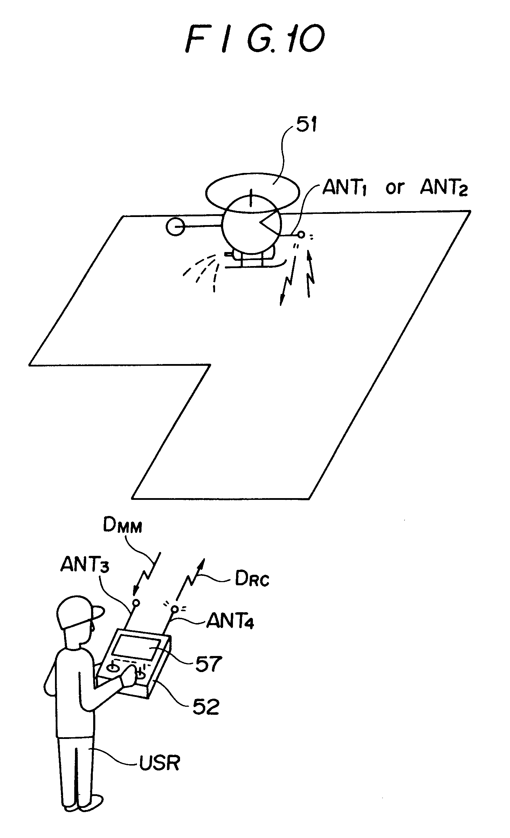

The operation of this embodiment will now be described with reference to FIGS. 10 to 16.

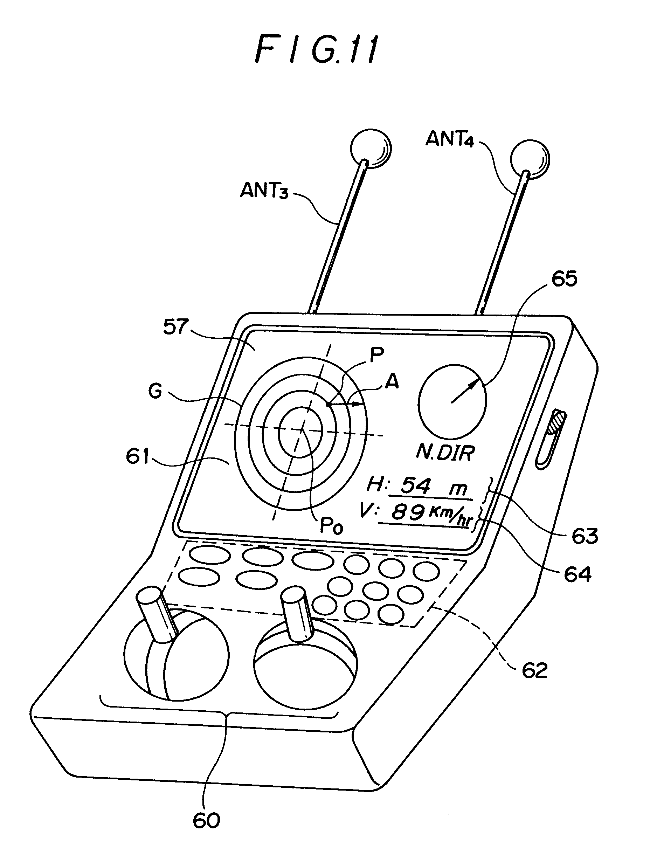

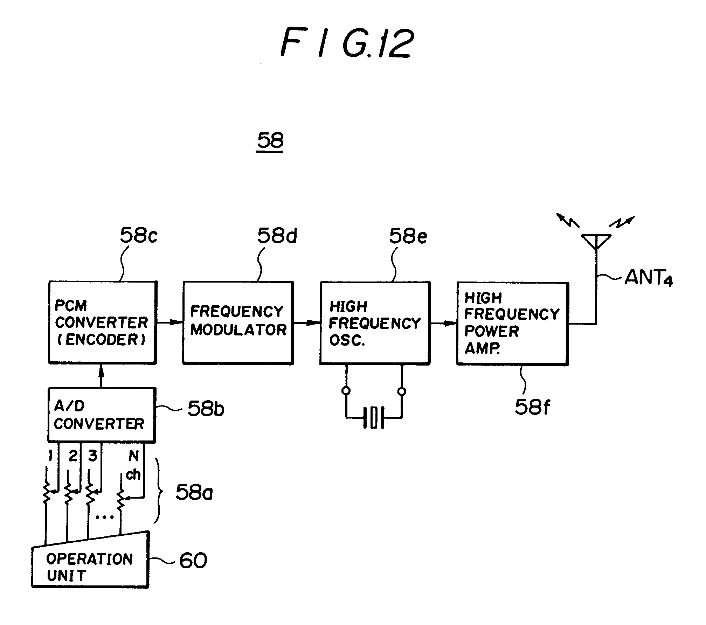

An operator USR operates an operation unit 60 (FIGS. 11 and 12) of the remote control device 51 to thereby transmit remote control data D_{RC} through the transmitting antenna ANT₄.

In practical terms, the remote controll transmitter 58 is operative to convert voltages (analog signal of N-channels) of a potentiometer 58a connected to the operation unit 60 to digital data by using an A/D converter 58b to implement code conversion to the digital data by using a PCM converter (encoder) 58c to convert it to serial pulse train. Then, the remote control transmitter 58 carries out FM (Frequency Modulation) - FSK (Frequency Shift Keying) processing at a transmission rate which falls within a predetermined signal bandwidth by using a frequency modulator 58d to convert it to a high frequency signal by using a high frequency oscillator 58e to carry out high frequency amplification by using a high frequency power amplifier 58f thereafter to transmit, from the antenna ANT₄, it as remote control data D_{RC} converted into the high frequency signal.

The remote controll receiver 55 of the radio controlled helicopter 51 receives remote control data D_{RC} through the receiving antenna ANT₂ to output various control signals Sc for carrying out the operation control of the radio controlled helicopter 51. Thus, the radio controlled helicopter 51 carries out a flying operation based on the remote control data D_{RC}.

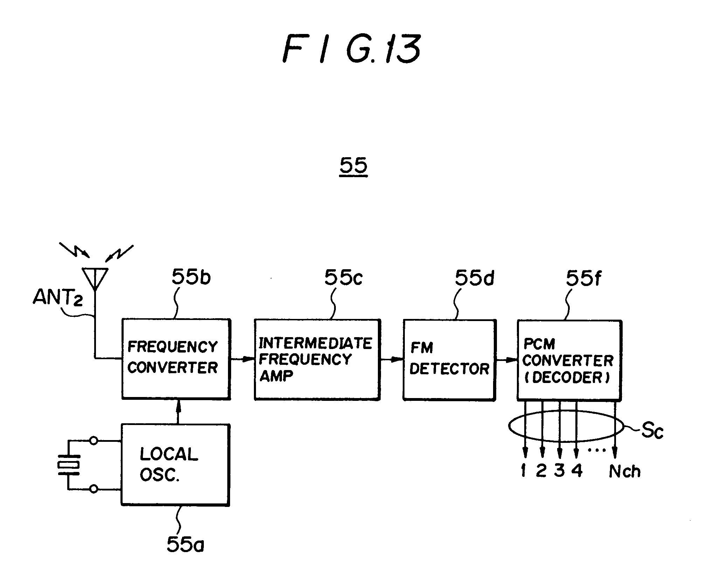

In actual terms, the remote control receiver 55 is operative to receive, as shown in FIG. 13, remote control data D_{RC} transmitted from the remote control transmitter 58 through the antenna ANT2 to convert it to an intermediate frequency signal by using a local oscillator 55a and a frequency converter 55b to output it to an intermediate frequency amplifier 55c. The intermediate frequency amplifier 55c amplifies the inputted intermediate frequency sinal to output it to a FM detector 55d. The FM detector 55d carries out FM detection of the amplified intermediate frequency signal to thereby restore it to the original PCM waveform. This original PCM waveform is subjected to decoding and error checking by using a PCM converter (decoder) 55f to output various control signals Sc (of N channels) each serving as a servo drive signal.

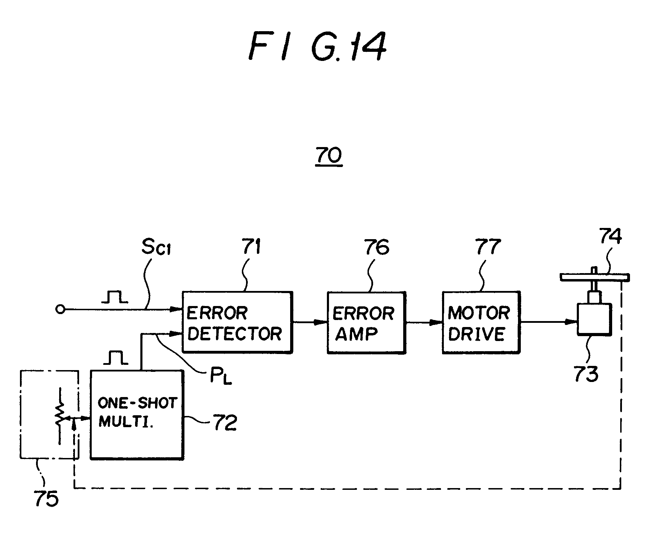

A control signal of one channel of the control signals Sc, e.g., a control signal Sc1 of the first channel is, as shown in FIG. 14, inputted to one input terminal of an error detector 71 of a servo circuit 70 for the first channel. A pulse output signal PL from an one-shot multivibrator (Monostable Multivibrator) 72 is inputted to the other input terminal of the error detector 71. In this case, the one-shot multivibrator outputs, as a pulse output signal PL, a pulse signal having a pulse width proportional to the position of an output shaft of a servo motor 73 on the basis of an output signal of a potentiometer 75 connected to the output shaft 74.

The error detector 71 makes a comparison between the pulse width of the pulse output signal PL and the pulse width of the control signal Scl of the first channel to output an error signal to an error amplifier 76, at which this error signal is amplified. A motor drive circuit 77 drives the servo motor 73 in a direction such that the error becomes equal to zero on the basis of the amplified error signal to stop driving of the servo motor 73 at the position where the error is equal to zero.

In a manner similar to the above, servo circuits of the second to the N-th channels are operated. Thus, remote controls corresponding to the inputted control signals Sc are carried out.

Simultaneously with this, the GPS receiver 53 of the radio-controlled helicopter 51 receives radio waves from GPS satellites or GPS radio wave transmitters (not shown) to determine a position of the radio controlled helicopter 51 to output GPS position determination data D_{G}. The position determination data transmitter 54 transmits position determination data D_{MM} indicating the movement state through the transmitting antenna ANT₁ on the basis of the outputted GPS position determination data D_{G}.

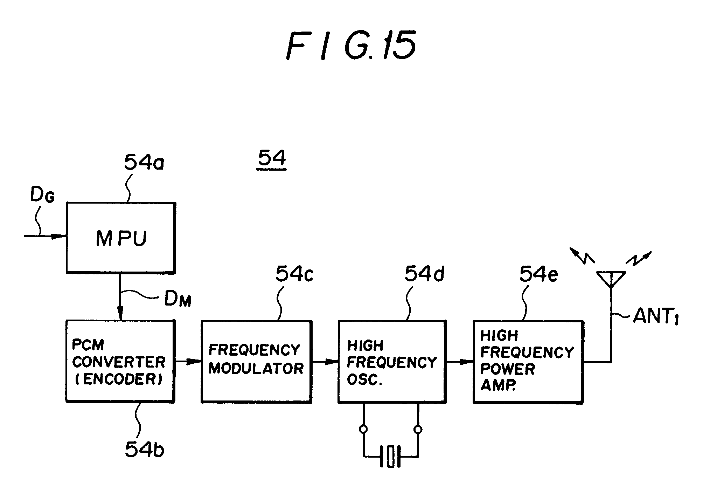

In actual terms, the position determination data transmitter 54 is operative, as shown in FIG. 15, to convert, by using a microprocessor unit (MPU) 54a position determination data D_{G} outputted from the GPS receiver to position determination data D_{M} including movement direction, movement speed, and altitude, etc. At this time, in the case where the GPS receiver can carry out the three-dimensional position determination (in the case where position determining radio waves from four GPS satellites can be received), since the position determination data D_{G} includes information such as movement direction, movement speed and altitude, etc., it is possible to output such position determination data as position determination data D_{M} only by conversion of the data format. Further, in such cases that the three-dimensional position determination is temporarily unable to be conducted, position determination data D_{M} including movement direction, movement speed and altitude, etc. is determined on the basis of the last position determination data D_{G}, etc. outputted from the GPS receiver to output it. Subsequently, this position determination data D_{M} is subjected to coding by a PCM converter (encoder) 54b to convert it to a serial pulse train. Thereafter, the serial pulse train is subjected to FM (Frequency Modulation) - FSK (Frequency Shift Keying) processing at a transmission rate which falls within a predetermined signal bandwidth by using a frequency modulator 54c to convert it to high frequency by using a high frequency oscillator 54d to carry out high frequency amplification by using a high frequency power amplifier 54e thereafter to transmit, from the antenna ANT₁, it as position determination data D_{MM} converted into the high frequency signal.

Position determination data receiver 56 of the remote control device 52 receives position determination data D_{MM} through the receiving antenna ANT₃ to output it as display data D_{D}. Thus, the movement state of the radio controlled helicopter 51 is displayed on the basis of the display data D_{D} on the display 57.

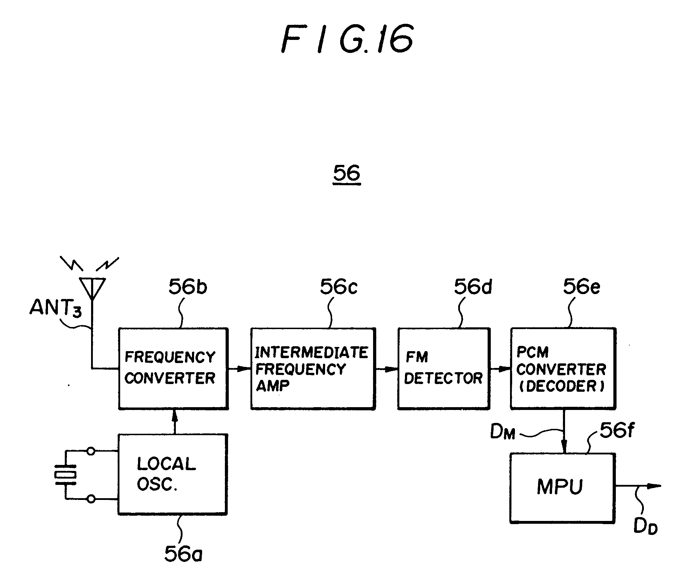

In actual terms, the position determination data receiver 56 is operative to receive, as shown in FIG. 16, position determination data D_{MM} of high frequency transmitted from the position determination data transmitter 54 through the antenna ANT₃ to convert it to an intermediate frequency by using a local oscillator 56a and a frequency converter 56b to output it to an intermediate frequency amplifier 56c. The intermediate frequency amplifier 56c amplifies the inputted intermediate frequency signal to output it to a FM detector 56d. The FM detector 56d carries out FM detection of the amplifier intermediate frequency signal to restore it to the original PCM waveform. This original PCM waveform is subjected to decoding and error checking by using a PCM converter (decoder) 56e to output the original position determination data D_{M} to a microprocessor unit (MPU) 56f. The microprocessor unit 56f outputs display data D_{D} to the display 57 on the basis of the position determination data D_{M}.

The display form of the movement state is as shown in FIG. 11, for example. The present position relative to the reference position P_{O} of the radio controlled helicopter 51 is shown by the black point P in position display area 61 of the display 57, and the movement direction of the radio controlled helicopter 51 is indicated by an arrow A. The reference position P_{O} is, e.g., an operation position by the operator USR, and a start position of the radio controlled helicopter 51, etc., and is set in advance by operating data input section 62 of the remote control device before flying. Further distance gauges G are provided in a concentric form with the reference position P_{O} as a central portion in the position display area 61. By reading a distance gauge G, a distance from the set reference position P_{O} to the radio controlled helicopter 51 can be recognized. Further, the flight altitude of the radio controlled helicopter 51 is numerically indicated in the altitude display area 63, and the flying speed is numerically indicated in speed display area 64. Further, an azimuth display section 65 is provided on the display 57, and a direction of north is indicated by an arrow. This azimuth is displayed on the basis of data obtained by using a geomagnetic sensor (not shown), etc..

As described above, since various flying data are displayed on the display 57, even in the event that the radio controlled helicopter 51 is out of the visual field of the operator USR, or is hiding behind obstacle, it is possible to easily carry out remote control.

### Fourth embodiment

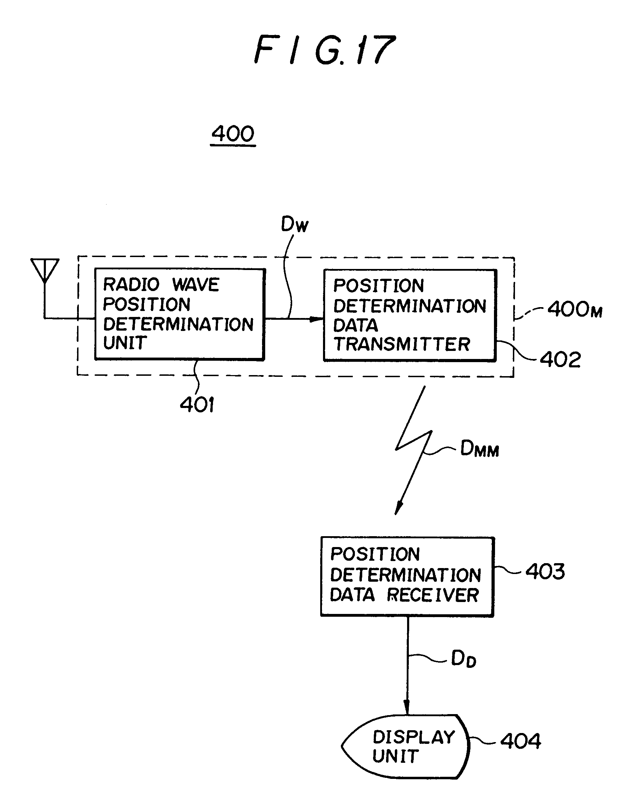

The outline of the configuration of an embodiment of the fourth invention is shown in FIG. 17.

A movement monitoring system 400 for a moving body comprises a radio wave position determination unit 401 provided in moving body 400_{M} and adapted to receive radio waves from position determination radio wave transmitters to determine a position of the moving body 400_{M} to output radio wave position determination data D_{W}, a position determination data transmitter 402 provided in the moving body 400_{M} and adapted to transmit position determination data D_{MM} on the basis of the radio wave position determination data D_{W}, a position determination data receiver 403 adapted to receive the transmitted position determination data D_{MM} to output it as display data D_{D}, and a display unit 404 for displaying the movement state of the moving body 400_{M} on the basis of the display data D_{D}.

In accordance with this embodiment, the radio wave position determination unit 401 receives radio waves from position determination transmitters to determine a position of the moving body 400_{M} to output radio wave position determination data D_{W}. The position determination data transmitter 402 transmits the position determination data D_{MM} on the basis of the radio wave position determination data D_{W}. The position determination data receiver 403 receives the transmitted position determination data D_{MM} to output it as display data D_{D}. Further, the display unit 404 displays the movement state of the moving body 400_{M} on the basis of the display data D_{D}. Accordingly, it is possible to easily monitor, on a real time basis, an actual movement state of the moving body on the basis of the position determination data by the position determining radio wave, advantageously facilitating the moving body to be remotely controlled.

In more detail, while, in the above-described third embodiment, there is employed such a configuration to display, on the display of the remote control device, the present position, etc. of the remote controlled helicopter on the basis of radio waves from GPS satellites, there may be employed a configuration such that transmitters as a position determining radio wave receiver for transmitting radio waves in the same form of that of the GPS satellites are provided at the peripheral portion so as to include the flying area in the same manner as in the second embodiment to display, on the display of the remote control device, the present position, etc. of the remote controlled helicopter on the basis of position determining radio waves from the transmitters. In addition, there may be employed such a configuration to transmit position determining radio waves in a form different from that of radio waves transmitted from GPS satellites as position determining radio waves generated from the transmitters. In this case, it is sufficient to change the GPS receiver to a receiver capable of receiving position determining radio wave.

### Fifth embodiment

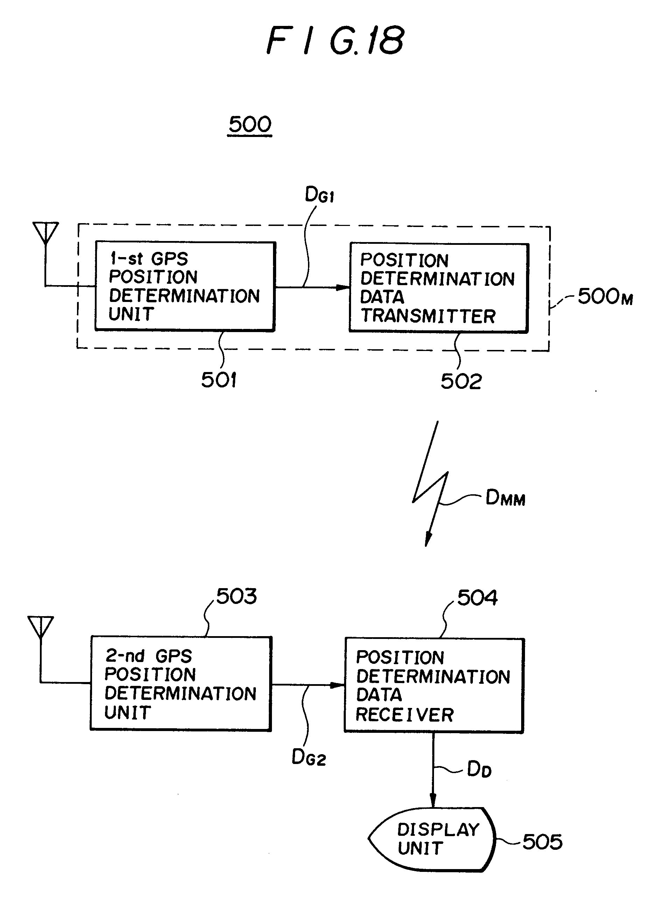

The outline of the configuration of an embodiment of the fifth invention is shown in FIG. 18.

A movement monitoring system 500 for a moving body comprises a first GPS position determination unit 501 provided in moving body 500_{M} and adapted to receive radio waves from GPS satellites to determine a position of the moving body 500_{M} to output first GPS position determination data D_{G1}, a position determination data transmitter 502 provided in the moving body 500_{M} and adapted to transmit position determination data D_{MM} on the basis of the first GPS position determination data D_{G1}, a second GPS position determination unit 503 adapted to receive radio waves from the GPS satellites to determine a monitoring position to output second GPS position determination data D_{G}₂, a position determination data receiver 504 adapted to receive the transmitted position determination data D_{MM} and to output display data D_{D} on the basis of the position determination data D_{MM} and the second GPS position determination data D_{G}₂, and a display unit 505 for displaying relative movement state with respect to the second GPS position determination unit 503 of the moving body 500_{M} on the basis of the display data D_{D}.

In accordance with this embodiment, the first GPS position determination unit 501 receives radio waves from GPS satellites to determine a position of the moving body 500_{M} to output first GPS position determination data D_{G}₁. The position determination data transmitter 502 transmits position determination data D_{MM} on the basis of the first GPS position determination data D_{G1}. The second GPS position determination unit 503 receives radio waves from the GPS satellites to determine a monitoring position to output second GPS position determination data D_{G}₂. The position determination data receiver 504 receives the transmitted position determination data D_{MM} and to output display data D_{D} on the basis of the position determination data D_{MM} and the second GPS position determination data D_{G}₂. The display unit 505 displays relative movement state with respect to the second GPS position determination unit 503 of the moving body 500_{M} on the basis of the display data D_{D} . Accordingly, it is possible to easily monitor relative movement state with respect to the monitoring position of the moving body on the basis of the GPS position determination data.

The fifth embodiment will now be described in more detail with reference to the attached drawings.

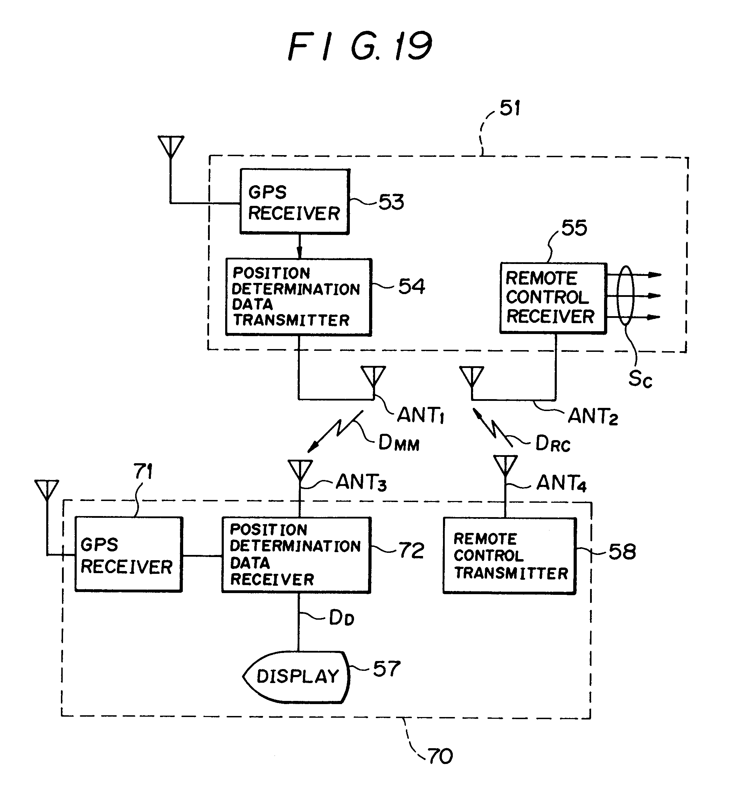

FIG. 19 is a block diagram showing the basic configuration of the fifth embodiment. The same reference numerals are respectively attached to the same portions as those of the third embodiment, and their detailed explanation is omitted here.

The fifth embodiments differs from the third embodiment of FIG. 9 in that a GPS receiver 71 is provided also in a remote control device 70 to make, by using a position determination data receiver 72, comparison between the position determination data D_{MM} transmitted by the radio controlled helicopter 51 and the present position of the remote control device 70 obtained by the GPS receiver 71, thus permitting the distance from the remote control device 70 to be automatically displayed on the display 57 with the present position of the remote control device 70 as a reference position P_{O}.

Thus, in the case where the operator USR moves, data of the reference position P_{O} is updated accordingly. Thus, it is possible to display, at all times, a correct distance between the radio controlled helicopter 51 and the remote control device 70. In this case, there may be employed such a configuration, in order to prevent display from being frequently switched, to store a reference position P_{O} immediately after switching to update data at the reference position P_{O} only when the movement of the actual reference position P_{O} is above a predetermined distance.

As described above, in accordance with the fifth embodiment, since it is possible to easily monitor, on a real time basis, relative movement state with respect to a person who monitors the moving body on the basis of the GPS position determination data, it is possible to easily recognize the position of the moving body even in the case where there is any movement of the monitoring point, thus advantageously facilitating remote control, etc. of the moving body.

### Sixth embodiment

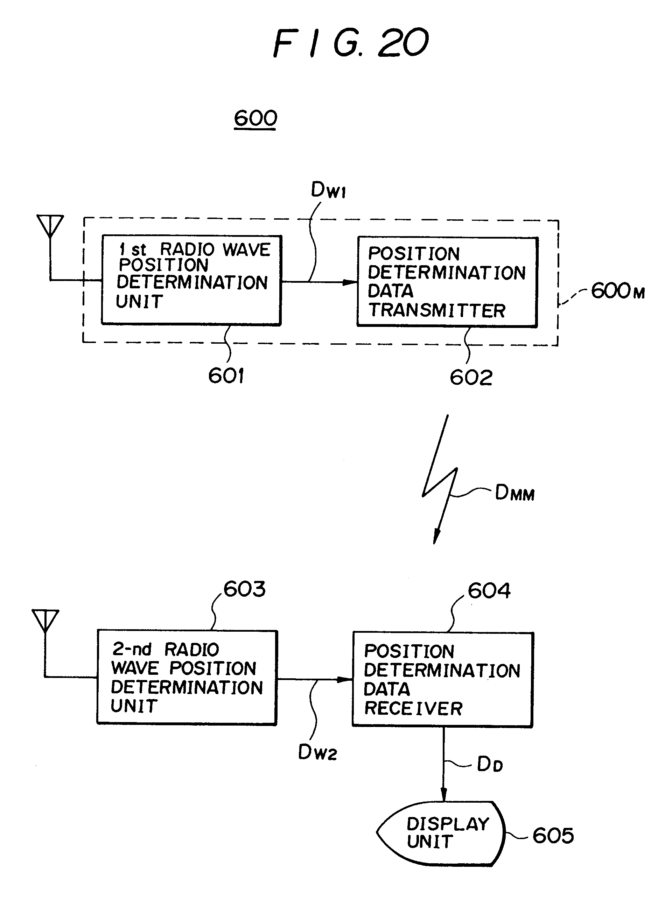

The outline of the configuration of a sixth embodiment of this invention is shown in FIG. 20.

A movement monitor system 600 for a moving body comprises a first radio wave position determination unit 601 provided in moving body 600_{M} and adapted to receive radio waves from position determining radio wave transmitters to determine a position of the moving body 600_{M} to output first radio wave position determination data D_{W}₁, a position determination data transmitter 602 provided in the moving body 600_{M} and adapted to transmit position determination data D_{MM} on the basis of the first radio wave position determination data D_{W}₁, a second radio wave position determination unit 603 adapted to receive radio waves from the position determining radio wave transmitters to determine a monitoring position to output second position determination data D_{W}₂, position determination data receiver 604 adapted to receive the transmitted position determination data D_{MM} and to output display data D_{D} on the basis of the position determination data and the second radio wave position determination data D_{W}₂, and a display unit 605 for displaying relative movement state with respect to the second radio wave position determination unit 603 of the moving body 600_{M} on the basis of the display data D_{D}.

In accordance with this embodiment, the first radio wave position determination unit 601 receives radio waves from the position determining transmitters to determine a position of the moving body 600_{M} to output first radio wave position determination data D_{W}₁. The position determination transmitting means 602 transmits the position determination data D_{MM} on the basis of the first radio wave position determination data D_{W}₁. The second radio wave position determination unit 603 receives radio waves from the position determining radio wave transmitters to determine a monitoring position to output second radio wave position determination data D_{W}₂. The position determination data receiver 604 receives the transmitted position determination data D_{MM} and to output display data D_{D} on the basis of the position determination data and the second radio wave position determination data D_{W}₂. The display unit 605 displays relative movement state with respect to the second radio wave position determination unit 603 of the moving body 600_{M} on the basis of the display data D_{D}. Accordingly, it is possible to easily monitor relative movement state with respect to the monitoring position of the moving body on the basis of the position determination data by the position determining radio waves.

In more detail, while, in the above-described fifth embodiment, there is employed such a configuration to display relative distance between the remote controlled helicopter and the remote control device on the basis of radio waves from GPS satellites, there may be employed a configuration such that transmitters as a position determining radio wave transmitter for transmitting radio waves in the same form of that of the GPS satellites are provided at the peripheral portion so as to include the flying area in the same manner as in the second embodiment to display relative distance on the basis of position determining radio waves from the transmitters. In addition, there may be employed such a configuration to transmit position determining radio waves in a form different from that of radio waves transmitted from GPS satellites as position determining radio waves generated from the transmitters. In this case, it is sufficient to change the GPS receiver to a receiver capable of receiving position determining radio wave.

As described above, in accordance with the sixth embodiment, since the relative movement state with respect to a person who monitors a moving body can be easily monitored on the basis of the position determination data by position determining radio waves, it is possible to easily recognize the position of the moving body even in the case where there is any movement of the monitoring point, and to easily carry out control of the moving body even in the case where the moving body is subjected to remote control.

While explanation has been given in the above-described respective embodiments in connection with the case where the moving body is continuously moved, there may be employed such a configuration to stop a moving body at a specific position as in the case where a radio controlled air-ship, etc. is used to carry out air-photographing. Thus, it is possible to always hold such a moving body at a correct position.

While, in the above-described respective embodiments, explanation has been given only in connection with a flying body as a moving body, this invention can be applied to other moving bodies such as automotive vehicle, ship, and the like.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A movement control system for a moving body comprising:
position determination means adapted to receive radio waves from a positioning signal generating source to determine a position of the moving body to output position determination data;
movement scheduled path data memory means for storing movement scheduled path data of said moving body;
arithmetic means for detecting a deviation between an actual movement path and a movement scheduled path of said moving body on the basis of said position determination data and said movement scheduled path data to calculate correction control data for correcting the deviation, and
movement control means for controlling movement manipulating magnitude of said moving body on the basis of said correction control data.

2. A movement control system as set forth in claim 1, wherein said positioning signal generating source comprises GPS satellites.

3. A movement control system as set forth in claim 1, wherein said positioning signal generating source comprises radio wave transmitters.

4. A movement control system as set forth in claim 1, wherein said movement control means comprises:
extraordinary state detection means for detecting an extraordinary state in the controlled moving body to output an extraordinary state detection signal, and
moving body operating state holding means responsive to said extraordinary state detection signal to hold an operating state of said moving body at a position of said moving body at a time when said extraordinary state detection signal is outputted.

5. A movement control system as set forth in claim 1, wherein said moving body is a remote control helicopter.

6. A movement monitoring system for a moving body, comprising:
position determination means provided in the moving body and adapted to receive radio waves from a positioning signal generating source to determine a position of said moving body to output position determination data,
position determination data transmitting means provided in said moving body and adapted to transmit position determination data corresponding to movement state of said moving body on the basis of said position determination data,
position determination data receiving means adapted to receive the transmitted position determination data to output it as display data, and
display means for displaying movement state of said moving body on the basis of said display data.

7. A movement monitoring system as set forth in claim 6, wherein said positioning signal generating source comprises GPS satellites.

8. A movement monitoring system as set forth in claim 6, wherein said positioning signal generating source comprises radio wave transmitters.

9. A movement monitoring system for a moving body, comprising:
first position determination means provided in the moving body and adapted to receive radio waves from a positioning signal generating source to determine a position of said moving body to output first position determination data,
position determination data transmitting means provided in said moving body and adapted to transmit position determination data corresponding to movement state of said moving body on the basis of said first position determination data,
second position determination means adapted to receive radio waves from said positioning signal generating source to determine a monitoring position to output second position determination data,
position determination data receiving means adapted to receive the transmitted position determination data and to output display data corresponding to relative movement state of said moving body on the basis of said position determination data and said second position determination data, and
display means for displaying the relative movement state with respect to said second position determination means of said moving body on the basis of said display data.

10. A movement monitoring system as set forth in claim 9, wherein said positioning signal generating source comprises GPS satellites.

11. A movement monitoring system as set forth in claim 9, wherein said positioning signal generating source comprises radio wave transmitters. display data.
